# EUROPEAN PATENT APPLICATION

(11) **EP 4 768 520 A1**
(43) Date of publication of application: **01.07.2026**
(21) Application number: 24867600.9
(22) Date of filing: 23.09.2024
(51) Int. Cl.: C08G 69/14, C08G 69/16

(54) **POLYPEPTOID AND PREPARATION METHOD THEREFOR**

(30) Priority: 22.09.2023 CN 202311236018
(71) Applicant: Beijing Jutide Biotech Co., Ltd., Beijing 100080 (CN)
(72) Inventor: LU, Hua, Beijing 100080 (CN); WANG, Shuo, Beijing 100080 (CN)
(74) Representative: Cabinet Becker et Associés
(86) International application number: PCT/CN2024/120379
(87) International publication number: WO 2025/061195

(57) **Abstract**

Disclosed is a polypeptoid having a degree of polymerization in the range of 550 to 8,000. Further disclosed is a method for preparing a polypeptoid.

## Description

The present invention claims the priority of the Chinese Patent Application No. 202311236018.7 filed on September 22, 2023, the disclosure of which is hereby incorporated in its entirety as a part of the present invention.

### TECHNICAL FIELD

Embodiments of the present invention relate to the field of polymers, and specifically to a polypeptoid and a preparation method therefor.

### BACKGROUND

Polypeptides are widely used in fields such as functional materials and biomedical materials due to their good biocompatibility and degradability. The intra-/inter-molecular hydrogen bond interactions of polypeptides enable them to form secondary structures such as α-helices and β-sheets, and further assemble into nanomaterials with biological functions. However, at the same time, the hydrogen bond interactions of peptide chains also lead to shortcomings such as poor solubility and difficulty in processing. Therefore, the chemical synthesis of new biomacromolecules is the goal pursued by researchers. Polypeptoids are a general term of polymers containing substituents attached to the N atoms of the aliphatic polyamide backbone, which have similar backbone structures to those of polypeptides. Therefore, polypeptoids are also polyamino acids with excellent biocompatibility and bioactivity.

The attachment of substituents to the N atoms of polypeptoids leads to the disappearance of intra- and inter-chain hydrogen bond of polypeptoid. Consequently, polypeptoids have better solubility and resistance to protease hydrolysis than polypeptides. Furthermore, in the polypeptoids, a stable and orderly secondary structure can also be obtained by introducing specific interactions through side chains. Therefore, polypeptoid biomacromolecules as a new amino acid polymer are demonstrating increasingly important value in the field of biomaterials.

For example, polysarcosine (pSar) is a nonionic, water-soluble polypeptoid with sarcosine (i.e., N-methyl glycine, a human endogenous amino acid) as the repeating unit, which has similar electroneutrality, flexibility, high hydrophilicity, low cytotoxicity, and excellent antibiofouling properties compared with polyethylene glycols (PEGs), and is therefore widely considered to be a potential substitute for PEGs. For example, pSar-interferon conjugate (pSar-IFN) exhibits a similar *in vivo* circulation half-life as PEG-IFN conjugate of the same size, and has a better tumor inhibitory effect than the latter. pSar lipids have also been used to replace PEG lipids in lipid nanoparticles (LNPs). In studies on mRNA delivery, pSar-based LNPs demonstrated lower immunogenicity and higher delivery efficiency than PEGylated LNPs. In addition, highly hydrophilic pSar units are also widely used in the constitution of surfactants or amphiphilic block copolymers, providing an alternative to PEGs for the design of nonionic surfactants and nano-therapeutic systems.

Polypeptoids such as pSar are usually prepared by the ring-opening polymerization (ROP) of the *N*-carboxylanhydrides (NCAs) or *N*-thiocarboxylanhydrides (NTAs) of the corresponding amino acids, which can give narrowly dispersed polymer products with controllable molecular weight and end groups. However, the reported NCA polymerization methods often require strict anhydrous experimental conditions, which limits their wider application and large-scale production. In contrast, NTAs and their polymerization have better water tolerance. However, they suffer from low polymerization activity and require relatively harsh reaction conditions, such as heating or the addition of catalysts. Also, until now, the polypeptoids obtained from the controlled polymerization of NCA or NTA tend to have relatively low molecular weights with a degree of polymerization (DP) typically at or below 500, that corresponds to a maximum molecular weight of about 35 kDa. Compared to commercially available PEGs with a wide molecular weight range (0.3-10,000 kDa), the molecular weight range of polypeptoids is undoubtedly very limited, which restricts their potential applications in a wider range of scenarios. For example, in the PEGylation modification of proteins, several FDA-approved protein drugs have been modified with PEG chains having higher molecular weight in a range of 35-80 kDa, which is difficult to achieve with existing synthetic methods for polypeptoids. To further promote the research and development of polypeptoids, there is an urgent need to develop a rapid, robust polymerization method for NCAs with a wide molecular weight range.

### SUMMARY

At least one embodiment of the present invention provides a polypeptoid having a degree of polymerization (DP) in a range of 550 to 8,000.

In some examples, the polypeptoid has a DP in a range of 550 to 1,000.

In some examples, the polypeptoid has a dispersity of less than 1.09.

In some examples, the polypeptoid has a structure represented by Formula (I): 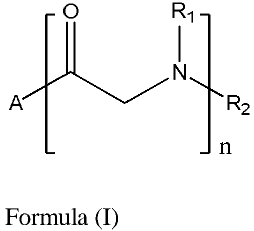 wherein,
R₁ is selected from C₁-C₁₂ alkyl, C₁-C₁₂ halo alkyl, C₃-C₁₂ heterocyclyl, C₆-C₁₀ aryl, and C₆-C₁₀ heteroaryl, wherein the C₁-C₁₂ alkyl, C₁-C₁₂ halo alkyl, C₃-C₁₂ heterocyclyl, C₆-C₁₀ aryl, and C₆-C₁₀ heteroaryl are optionally unsubstituted or substituted with one to three substituents selected from halogen, C₁-C₆ alkyl, C₁-C₆ alkyloxy, C₆-C₁₀ aryl, C₆-C₁₀ aryloxy, C₆-C₁₀ heteroaryl, and C₆-C₁₀ heteroaryloxy, wherein the heterocyclyl, heteroaryl, and heteroaryloxy optionally comprises one to three heteroatoms independently selected from N, S, and O;
R₂ is selected from H, C₁-C₁₂ alkyl carbonyl, C₁-C₁₂ alkyloxycarbonyl, C₇-C₁₁ arylcarbonyl, and C₇-C₁₁aryloxycarbonyl, wherein the C₁-C₁₂ alkyl carbonyl, C₁-C₁₂ alkyloxycarbonyl, C₇-C₁₁ aryl, and C₇-C₁₁ aryloxycarbonyl are optionally unsubstituted or substituted with one to three substituents selected from halogen, C₁-C₆ alkyl, C₁-C₆ alkyloxy, C₆-C₁₀ aryl, C₆-C₁₀aryloxy, C₆-C₁₀ heteroaryl, and C₆-C₁₀ heteroaryloxy, wherein the heteroaryl or heteroaryloxy optionally comprises one to three heteroatoms independently selected from N, S and O;
A is selected from:
   (1) -NR₃R₄, wherein R₃ and R₄ are each independently selected from H, C₁-C₁₂ alkyl, C₁-C₁₂ halo alkyl, C₃-C₁₂ heterocyclyl, C₆-C₁₀ aryl, C₆-C₁₀ heteroaryl and Rₐ-(CH₂CH₂O)ₘ-CH₂CH₂-,
      wherein the C₁-C₁₂ alkyl, C₁-C₁₂ halo alkyl, C₃-C₁₂ heterocyclyl, C₆-C₁₀ aryl, and C₆-C₁₀ heteroaryl are optionally unsubstituted or substituted with one to three substituents selected from halogen, C₁-C₆ alkyl, C₁-C₆ alkyloxy, C₆-C₁₀ aryl, C₆-C₁₀aryloxy, C₆-C₁₀ heteroaryl, and C₆-C₁₀ heteroaryloxy, wherein the heterocyclyl, heteroaryl or heteroaryloxy optionally comprises one to three heteroatoms independently selected from N, S and O, and
      wherein Rₐ is CH₃O- or NH₂-, and m is an integer ranging from 1 to 10,000, wherein one or some or all of m repeating units -(CH₂CH₂O)- are unsubstituted or optionally substituted with C₁-C₆ alkyl or C₁-C₆ alkyloxy,
      with the proviso that R₃ and R₄ are not both H; and
   (2) -SR₅, wherein R₅ is selected from C₆-C₁₀ aryl and C₆-C₁₀ heteroaryl, wherein the C₆-C₁₀ aryl, and C₆-C₁₀ heteroaryl group is optionally unsubstituted or substituted with one to three substituents selected from halogen, hydroxyl, carboxyl, nitro, amino, cyano, mercapto, C₁-C₆ alkyl, and C₁-C₆ alkyloxy, wherein the heteroaryl optionally comprises one to three heteroatoms independently selected from N, S and O;
n is an integer ranging from 550 to 8,000.

In some examples, R₁ is selected from C₁-C₆ alkyl; R₂ is selected from H, C₁-C₁₂ alkyl carbonyl, and C₇-C₁₁arylcarbonyl.

In some examples, A is -NR₃R₄, wherein one of R₃ and R₄ is H, and the other is selected from phenyl-C₁-C₄ alkyl, wherein the phenyl is optionally unsubstituted or substituted with one to three substituents selected from halogen, C₁-C₄ alkyl and C₁-C₄ alkyloxy.

In some examples, the polypeptoid is polysarcosine (pSar) represented by Formula (II):

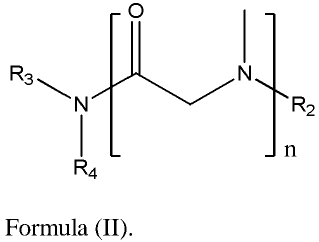

In some examples, A is -SR₅, wherein R₅ is phenyl which is optionally unsubstituted or substituted with one to three substituents selected from halogen, C₁-C₆ alkyl, and C₁-C₆ alkoxy.

In some examples, the polypeptoid is a polysarcosine represented by Formula (III):

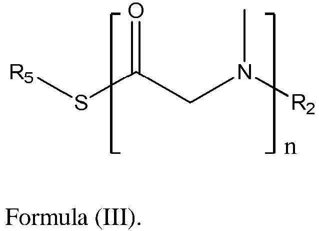

At least one embodiment of the present invention further provides a method for preparing a polypeptoid, comprising: polymerizing a compound of Formula (IV): 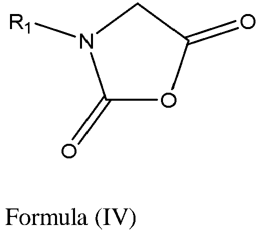 in the presence of an initiator, a catalyst and a solvent to form the compound of Formula (I): 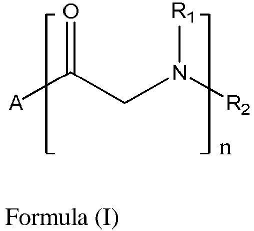 wherein,
R₁ is selected from C₁-C₁₂ alkyl, C₁-C₁₂ halo alkyl, C₃-C₁₂ heterocyclyl, C₆-C₁₀ aryl, and C₆-C₁₀ heteroaryl, wherein the C₁-C₁₂ alkyl, C₁-C₁₂ halo alkyl, C₃-C₁₂ heterocyclyl, C₆-C₁₀ aryl, and C₆-C₁₀ heteroaryl are optionally unsubstituted or substituted with one to three substituents selected from halogen, C₁-C₆ alkyl, C₁-C₆ alkyloxy, C₆-C₁₀ aryl, C₆-C₁₀ aryloxy, C₆-C₁₀ heteroaryl, and C₆-C₁₀ heteroaryloxy, wherein the heterocyclyl, heteroaryl, and heteroaryloxy optionally comprises one to three heteroatoms independently selected from N, S, and O;
R₂ is selected from H, C₁-C₁₂ alkyl carbonyl, C₁-C₁₂ alkyloxycarbonyl, C₇-C₁₁ arylcarbonyl, and C₇-C₁₁aryloxycarbonyl, wherein the C₁-C₁₂ alkyl carbonyl, C₁-C₁₂ alkyloxycarbonyl, C₇-C₁₁ aryl, and C₇-C₁₁ aryloxycarbonyl are optionally unsubstituted or substituted with one to three substituents selected from halogen, C₁-C₆ alkyl, C₁-C₆ alkyloxy, C₆-C₁₀ aryl, C₆-C₁₀aryloxy, C₆-C₁₀ heteroaryl, and C₆-C₁₀ heteroaryloxy, wherein the heteroaryl or heteroaryloxy optionally comprises one to three heteroatoms independently selected from N, S and O;
A is selected from:
   (1) -NR₃R₄, wherein R₃ and R₄ are each independently selected from H, C₁-C₁₂ alkyl, C₁-C₁₂ halo alkyl, C₃-C₁₂ heterocyclyl, C₆-C₁₀ aryl, C₆-C₁₀ heteroaryl and Rₐ-(CH₂CH₂O)ₘ-CH₂CH₂-,
      wherein the C₁-C₁₂ alkyl, C₁-C₁₂ halo alkyl, C₃-C₁₂ heterocyclyl, C₆-C₁₀ aryl, and C₆-C₁₀ heteroaryl are optionally unsubstituted or substituted with one to three substituents selected from halogen, C₁-C₆ alkyl, C₁-C₆ alkyloxy, C₆-C₁₀ aryl, C₆-C₁₀aryloxy, C₆-C₁₀ heteroaryl, and C₆-C₁₀ heteroaryloxy, wherein the heterocyclyl, heteroaryl or heteroaryloxy optionally comprises one to three heteroatoms independently selected from N, S and O, and
      wherein Rₐ is CH₃O- or NH₂-, and m is an integer ranging from 1 to 10,000, wherein one or some or all of m repeating units -(CH₂CH₂O)- are unsubstituted or optionally substituted with C₁-C₆ alkyl or C₁-C₆ alkyloxy,
      with the proviso that R₃ and R₄ are not both H; and
   (2) -SR₅, wherein R₅ is selected from C₆-C₁₀ aryl and C₆-C₁₀ heteroaryl, wherein the C₆-C₁₀ aryl, and C₆-C₁₀ heteroaryl group is optionally unsubstituted or substituted with one to three substituents selected from halogen, hydroxyl, carboxyl, nitro, amino, cyano, mercapto, C₁-C₆ alkyl, and C₁-C₆ alkyloxy, wherein the heteroaryl optionally comprises one to three heteroatoms independently selected from N, S and O;
n is an integer ranging from 550 to 8,000.

In some examples, the initiator is selected from R₃R₄N-R_{b}or R₅-SR_{b}, wherein R₃, R₄ and R₅ are as defined above, and R_{b} is selected from H and tris(C₁-C₆ alkyl )silyl; the catalyst is selected from C₁-C₁₂ alkyl carboxylic acid or benzoic acid, wherein the benzoic acid is unsubstituted or optionally substituted with one to three substituents independently selected from halogen, C₁-C₆ alkyl, and C₁-C₆ alkyloxy; and the solvent is selected from dichloromethane, chloroform, nitrobenzene, acetonitrile, dimethylformamide, and any mixture of one or more thereof.

In some examples, the initiator is selected from: propylamine, butylamine, pentylamine, *n-*hexylamine, cyclopentylamine, cyclohexylamine, aniline, benzylamine, propylenediamine, butanediamine, hexamethylenediamine, 1,8-diamino-3,6-dioxaoctane, tris(2-aminoethyl)amine and Rₐ-(CH₂CH₂O)ₘ-CH₂CH₂NH₂ or a combination of any one or more thereof, wherein Rₐ is as defined above.

In some examples, the initiator is selected from AR-SH or AR-S-Si(C₁-C₆ alkyl )₃, wherein AR is phenyl or naphthyl unsubstituted or substituted with one to three substituents independently selected from halogen, C₁-C₆ alkyl, and C₁-C₆ alkyloxy.

In some examples, the initiator is selected from benzylamine, p-methylthiophenol and trimethyl(phenylthio)silane; the catalyst is benzoic acid or pivalic acid; and the solvent is dichloromethane.

In some examples, the molar ratio of the catalyst to the initiator ranges from (0.1-100):1.

In some examples, the molar ratio of the catalyst to the initiator ranges from (0.5-10):1.

In some examples, the molar ratio of the catalyst to the initiator ranges from (2-6):1.

In some examples, the molar ratio of the compound of Formula (IV) to the initiator ranges from (20-10,000):1.

In some examples, the polymerization is carried out under ambient temperature and humidity conditions.

### BRIEF DESCRIPTION OF THE DRAWINGS

To clearly illustrate the technical solution of the embodiments of the invention, the drawings of the embodiments will be briefly described in the following; it is obvious that the described drawings are only related to some embodiments of the invention and thus are not limitative of the invention.

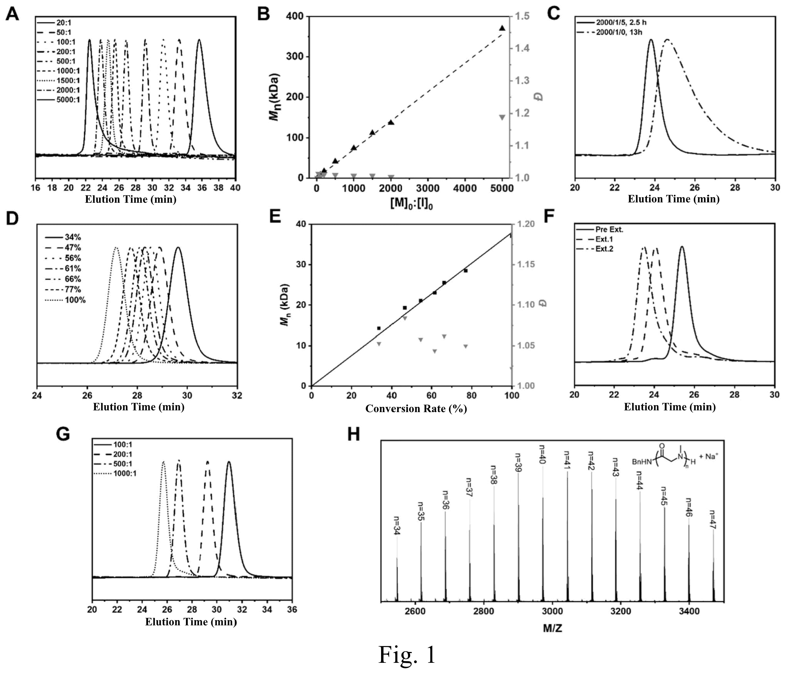

Fig. 1 illustrates the ring-opening polymerization of Sar-NCA catalyzed with benzoic acid according to an embodiment of the present invention. Among them, (A) a size exclusion chromatogram (SEC) trace of pSar at different [M]₀/ [I]₀ ratios, where [I]₀/ [A]₀ is set to 1/5; (B) graphs of Mₙ and Ð as a function of the [M]₀/ [I]₀ ratio; (C) an SEC trace of the polymerization mixture with or without benzoic acid catalysis with a [M]₀/ [I]₀ ratio of 2,000/1; (D) SEC traces at different monomer conversions with a [M]₀/[I]₀/[A]₀ ratio of 500/1/5; (E) graphs of Mₙ and Ð as a function of monomer conversion at a [M]₀/[I]₀/[A]₀ ratio of 500/1/5; (F) an SEC trace of pSar before and after chain extension; (G) SEC traces at different [M]₀/[I]₀ ratios in regular DCM under ambient atmosphere; and (H) MALDI-TOF MS spectrum of pSar prepared with [M]₀/[I]₀/[A]₀=50/1/5.

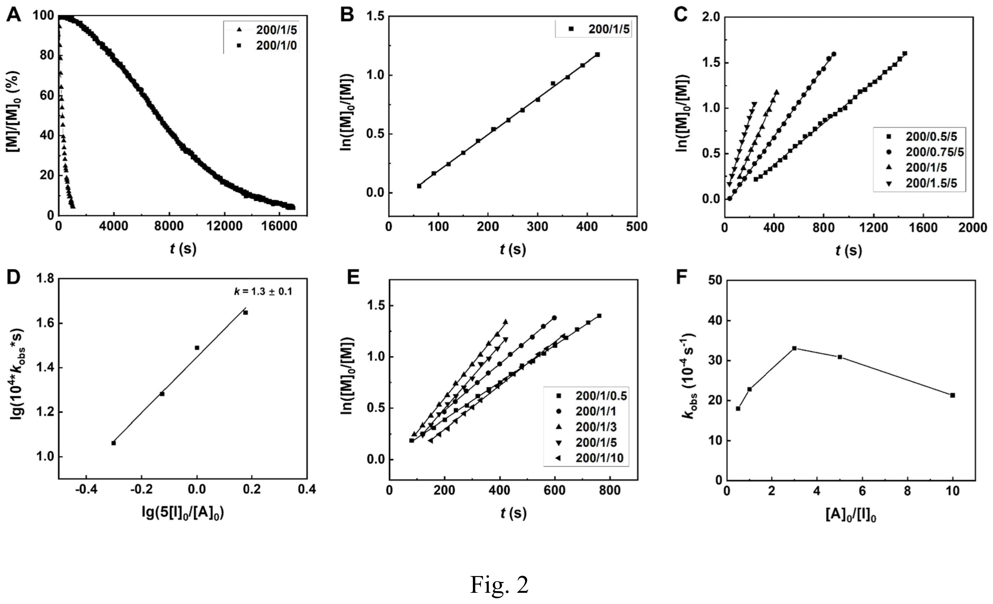

Fig. 2 illustrates a kinetic study on the ring-opening polymerization of Sar-NCA catalyzed with carboxylic acid according to an embodiment of the present invention. Among them, (A) a graph of [M]/[M]₀ versus time with a [M]₀/[I]₀ ratio of 200/1 with or without benzoic acid catalyst; (B) a graph of ln([M]₀/[M]) versus time with a [M]₀/[I]₀/[A]₀ ratio of 200/1/5; (C) a graph of ln([M]₀/[M]) versus time with a [M]₀/[A]₀ ratio of 200/5 with different initiator equivalents; (D) a graph of the obtained from (C) versus [I]₀ with a linear fit of the data (R²=0.988); (E) a graph of ln([M]₀/[M]) versus time with a [M]₀/[I]₀ ratio of 200/1 with different [A]₀ equivalents; and (F) a graph of the *k_{obs}* obtained from (E) versus [A]₀.

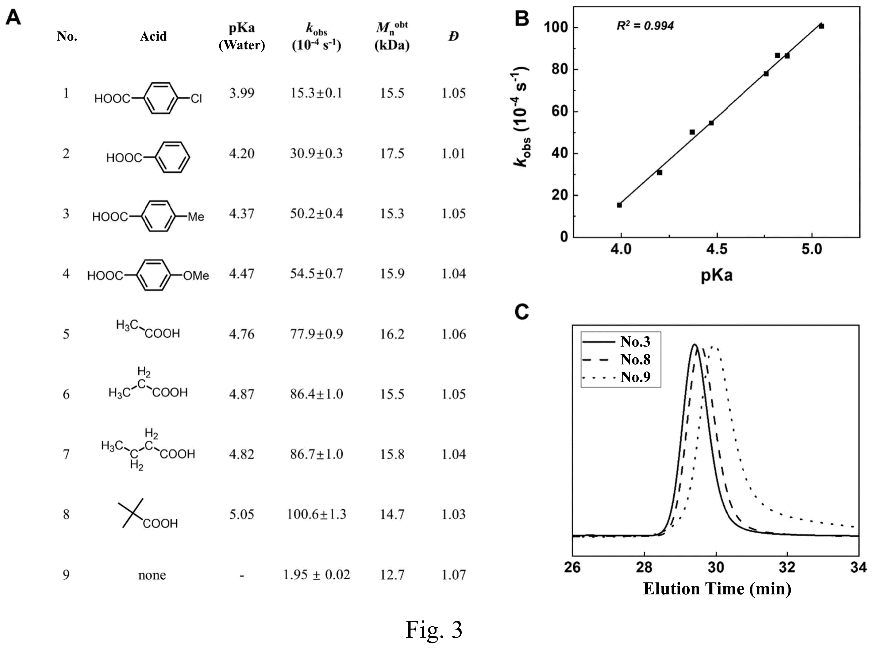

Fig. 3 illustrates a ring-opening polymerization of Sar-NCA catalyzed by different acids according to an embodiment of the present invention. Among them, (A) results of the ring-opening polymerization of Sar-NCA catalyzed by different carboxylic acids; (B) a graph of *k_{obs}* versus *pKa* of the respective acids; and (C) an SEC trace of selected entries from (A).

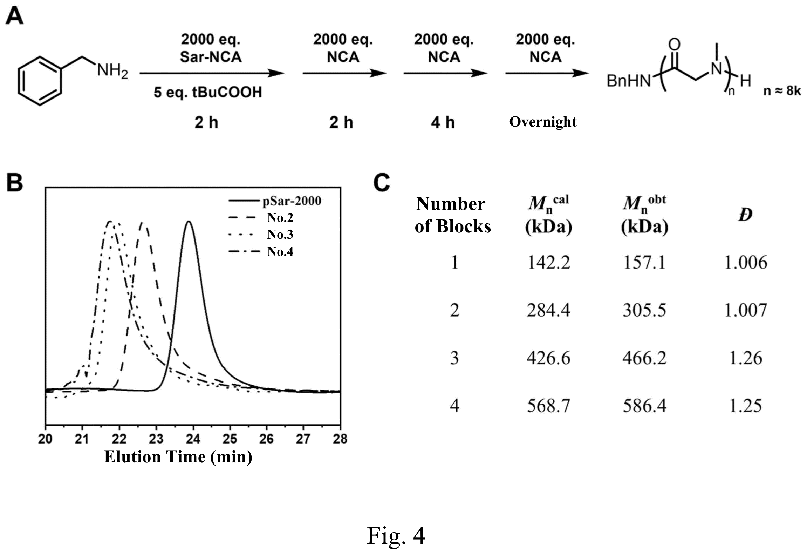

Fig. 4 illustrates a chain extension reaction catalyzed by *t*-BuCOOH for the synthesis of high molecular weight pSar, according to an embodiment of the present invention. Among them, (A) a continuous chain extension experiment; (B) an SEC trace of the chain extension reaction; and (C)*Mₙ* and Ð of the pSar product calculated according to the SEC.

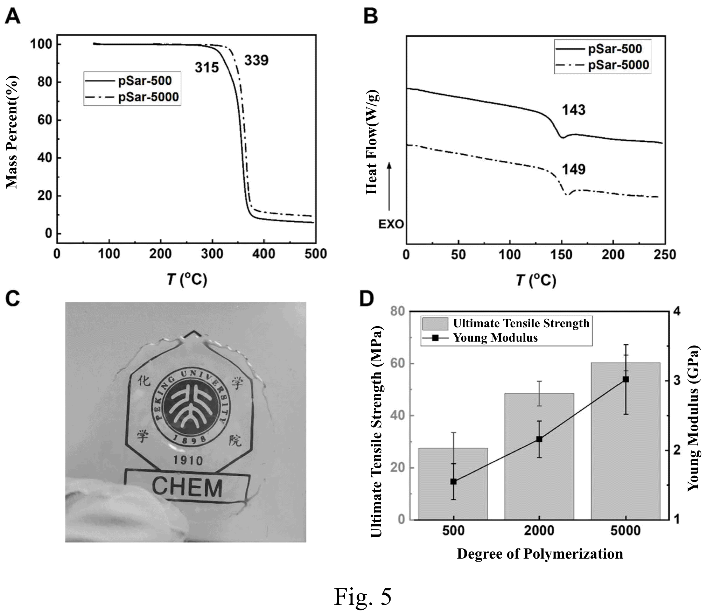

Fig. 5 illustrates the material properties of the high molecular weight pSar obtained according to an embodiment of the present invention. Among them, (A) TGA curves of pSar500 and pSar5000; (B) DSC curves of pSar500 and pSar5000; (C) photographs of pSar5000 as a transparent film; and (D) Tensile stress-strain curves of pSar500, pSar2000 and pSar5000.

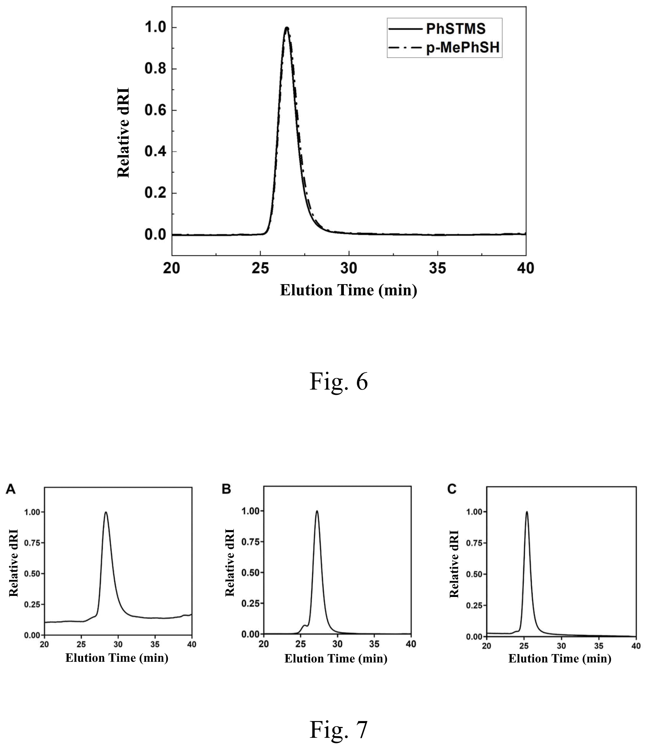

Fig. 6 illustrates an SEC chromatogram of the polymer obtained according to an embodiment of the present invention, wherein the polymerization is performed with trimethyl(phenylthio)silane (PhSTMS) and p-methylthiophenol (p-MePhSH) as initiators and benzoic acid as a catalyst.
Fig. 7 illustrates polymerization-initiating effects of trimethyl(phenylthio)silane (PhSTMS) with different ratio of monomer to initiator according to an embodiment of the present invention, wherein (A), (B) and (C) correspond to the polymers, Entries 3-5 in Table 2, respectively.

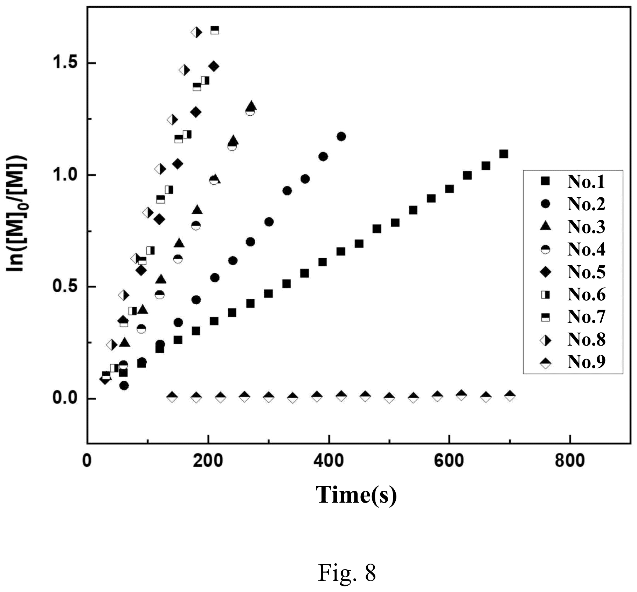

Fig. 8 illustrates dynamic relationships between ln([M]₀/[M]) vs time for Nos. 1 to 9 shown in Fig. 3A.

### DETAILED DESCRIPTION OF THE INVENTION

For the purposes of the following detailed description, it should be understood that the present invention can adopt various alternative variations and step sequences, unless explicitly stated to the contrary. In addition, all numbers, e.g., expressing the quantities of components used in the specification and claims are to be understood as being modified in all instances by the term "about", unless in any operation examples, or otherwise set forth. Accordingly, the numerical parameters set forth in the follow description and claims are approximations that may vary depending upon the desired properties to be obtained by the present application, unless otherwise indicated to the contrary. At the very least, it is not an attempt to limit the doctrine of equivalents to the scope of the claims, and each numerical parameter should at least be construed in light of the number of reported significant digits and by applying ordinary rounding techniques.

Notwithstanding that the numerical ranges and parameters setting forth the broad scope of the disclosure are approximations, the numerical values set forth in specific examples are reported as precisely as possible. However, any numerical values would inherently contain an error that necessarily results from the standard deviation found in their respective testing measurements.

Furthermore, it should be understood that any numerical range stated herein is intended to comprise all subranges subsumed therein. For example, a range of "1 to 10" is intended to comprise all subranges between ( and including) the stated minimum value of 1 and the stated maximum value of 10, that is, having a minimum value equal to or greater than 1 and a maximum value equal to or less than 10.

In the present invention, unless expressly stated otherwise, the use of singular comprises a plural and the use of a plural comprises a singular. Moreover, in the present invention, unless expressly stated otherwise, the use of "or" means "and/or", even though "and/or" can be expressly used in some cases. In addition, in the present invention, unless expressly stated otherwise, the use of "a" or "an" means "at least a/an". For example, "a" polymer, "a" composition, etc. refers to any one or more of these items.

Polypeptoids are typically prepared by ring-opening polymerization (ROP) of the corresponding amino acid *N*-carboxylic intraanhydride (NCA/NCAs) or *N*-thiocarboxylic intraanhydride (NTA/NTAs), giving narrowly dispersed polymeric products with controllable molecular weight and end groups. However, the reported NCA polymerization methods often require strict anhydrous experimental conditions, limiting their wider applications and large-scale productions. In addition, the polypeptoids obtained from the controlled polymerization of NCA or NTA tend to have relatively low molecular weights with a DP typically at or below 500. For example, the highest molecular weight of pSar obtained by the controlled polymerization of NCA or NTA is usually only around 35 kDa. This also limits a potential application of polypeptoids in more scenarios.

To solve the above and other problems, embodiments of the present invention provide a new polypeptoid having a polymerization degree of 550 to 8,000 and a preparation method therefor.

As used herein, the term "polypeptoids" is a general term of compounds containing substituents attached to the N atoms of the aliphatic polyamide backbone. Polypeptoids are novel biopolymer materials which have good biocompatibility and backbone structures similar to those of polypeptides. The substituents of polypeptoids are attached to the nitrogen atoms of the backbones, and their backbones do not have chiral centers and -NH···O=C-hydrogen bond interactions. Therefore, the polypeptoids have more flexible backbone structure, good solubility, and excellent protease stability. In addition, the performance of polypeptoids is mainly determined by the structures and properties of side chains. By rational designs of the side chain structure of polypeptoids, its performance can be effectively controlled. Therefore, polypeptoids are showing increasingly important value in the field of biomaterials.

As used herein, the term "degree of polymerization (DP)" is a measure of the size of polymer molecules. Since polymers are often a mixture of homologues with different molecular weights and different structural forms, the DP of a polymer refers to its average DP. For example, based on the number of repeating units, the DP is the average number of repeating units contained in the polymer chain, expressed as n. In some exemplary embodiments, the polypeptoids provided in the present invention can have a DP ranging from 20 to 8,000. For example, n can be greater than or equal to 20, 50, 100, 200, 300, 400, 450, 500 or 550, etc.; and can be less than or equal to 8,000, 7,500, 7,000, 6,500, 6,000, 5,500, 5,000, 4,500, 4,000, 3,500, 3,000, 2,500, 2,000, 1,500 or 1,000, etc.; alternatively, n can be within the range of values formed between any two thereof. As noted above, the present invention provides a polypeptoid that can have a much higher DP than polypeptoids which are previously synthesized in the art. Correspondingly, polypeptoids (such as pSar) with such high DP have higher molecular weights, and thus they can better replace PEGs with similar molecular weights to use in different fields, such as protein modification or film preparation, thereby greatly expanding its application scenarios.

As used herein, the term "dispersity", also known as polymer molecular weight dispersion or Polymer Dispersity Index (PDI), is a parameter for describing the difference in polymer chain length or polymer molecular weight distribution, which is often used to evaluate the uniformity and quality of polymers. Dispersity (PDI) is generally determined by measuring and calculating the ratio of the weight average molecular weight (M_{w}) to the number average molecular weight (Mₙ) of a polymer. If all polymer chains have the same length, the PDI is 1; and if the polymers have large chain length differences, the PDI will be greater than 1. Generally, the larger the PDI, the wider the molecular weight distribution range; and the smaller the PDI, the narrower the molecular weight distribution range. In practical applications, the lower the dispersity, the more uniform the polymer chain length and the better its quality. Therefore, the dispersity becomes one of the important indicators for evaluating the polymer quality. In some exemplary embodiments, the polypeptoids provided in the present invention can have a dispersity less than 1.5, e.g., less than 1.45, less than 1.40, less than 1.35, less than 1.30, less than 1.25, less than 1.20, less than 1.15, less than 1.13, less than 1.10, or less than 1.09, etc. The polypeptoids provided in the present invention have relatively low dispersity, indicating that they have good uniformity of polymer chain length, narrow molecular weight distribution, and high polymer quality.

In some aspects, the polypeptoids provided in the present invention can have a structure represented by Formula (I):

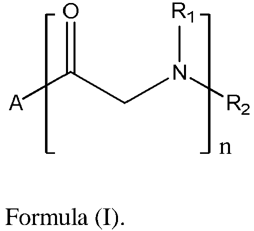

In some aspect, R₁ can be selected from C₁-C₁₂ alkyl, C₁-C₁₂ halo alkyl, C₃-C₁₂ heterocyclyl, C₆-C₁₀ aryl, and C₆-C₁₀ heteroaryl, wherein the C₁-C₁₂ alkyl, C₁-C₁₂ halo alkyl, C₃-C₁₂ heterocyclyl, C₆-C₁₀ aryl, and C₆-C₁₀ heteroaryl are optionally unsubstituted or substituted with one to three substituents selected from halogen, C₁-C₆ alkyl, C₁-C₆ alkyloxy, C₆-C₁₀ aryl, C₆-C₁₀ aryloxy, C₆-C₁₀ heteroaryl, and C₆-C₁₀ heteroaryloxy, wherein the heterocyclyl, heteroaryl, and heteroaryloxy optionally comprises one to three heteroatoms independently selected from N, S, and O. For example, R₁ can be selected from C₁₋₆ alkyl, such as methyl.

In some aspects, R₂ can be selected from H, C₁-C₁₂ alkyl carbonyl, C₁-C₁₂ alkyloxycarbonyl, C₇-C₁₁ arylcarbonyl, and C₇-C₁₁aryloxycarbonyl, wherein the C₁-C₁₂ alkyl carbonyl, C₁-C₁₂ alkyloxycarbonyl, C₇-C₁₁ aryl, and C₇-C₁₁ aryloxycarbonyl are optionally unsubstituted or substituted with one to three substituents selected from halogen, C₁-C₆ alkyl, C₁-C₆ alkyloxy, C₆-C₁₀ aryl, C₆-C₁₀aryloxy, C₆-C₁₀ heteroaryl, and C₆-C₁₀ heteroaryloxy, wherein the heteroaryl or heteroaryloxy optionally comprises one to three heteroatoms independently selected from N, S and O. For example, R₂ can be selected from H, C₁-C₁₂ alkyl carbonyl, and C₇-C₁₁ arylcarbonyl, etc.

In some other respects, A can be -NR₃R₄, wherein R₃ and R₄ are each independently selected from H, C₁-C₁₂ alkyl, C₁-C₁₂ halo alkyl, C₃-C₁₂ heterocyclyl, C₆-C₁₀ aryl, C₆-C₁₀ heteroaryl and Rₐ-(CH₂CH₂O)ₘ-CH₂CH₂-, wherein the C₁-C₁₂ alkyl, C₁-C₁₂ halo alkyl, C₃-C₁₂ heterocyclyl, C₆-C₁₀ aryl, and C₆-C₁₀ heteroaryl are optionally unsubstituted or substituted with one to three substituents selected from halogen, C₁-C₆ alkyl, C₁-C₆ alkyloxy, C₆-C₁₀ aryl, C₆-C₁₀aryloxy, C₆-C₁₀ heteroaryl, and C₆-C₁₀ heteroaryloxy, wherein the heterocyclyl, heteroaryl, or heteroaryloxy optionally comprises one to three heteroatoms independently selected from N, S, and O, and wherein Rₐ is CH₃O- or NH₂-, and m is an integer ranging from 1 to 10,000, wherein one or some or all of the m repeating units -(CH₂CH₂O)- are unsubstituted or optionally substituted with C₁-C₆ alkyl or C₁-C₆ alkyloxy, with the proviso that R₃ and R₄ are not simultaneously H. For example, A can be -NR₃R₄, wherein one of R₃ and R₄ is H, and the other is selected from phenyl-C₁-C₄ alkyl, wherein the phenyl is optionally unsubstituted or substituted with one to three substituents selected from halogen, C₁-C₄ alkyl and C₁-C₄ alkyloxy.

In some other aspects, A can be -SR₅, wherein R₅ is selected from C₆-C₁₀ aryl and C₆-C₁₀ heteroaryl, wherein the C₆-C₁₀ aryl, and C₆-C₁₀ heteroaryl group is optionally unsubstituted or substituted with one to three substituents selected from halogen, hydroxyl, carboxyl, nitro, amino, cyano, mercapto, C₁-C₆ alkyl, and C₁-C₆ alkyloxy, wherein the heteroaryl optionally comprises one to three heteroatoms independently selected from N, S and O. For example, A can be -SR₅, wherein R₅ is phenyl which is optionally unsubstituted or substituted with one to three substituents selected from halogen, C₁-C₆ alkyl, and C₁-C₆ alkoxy.

In some aspects, n is an integer ranging from 550 to 8,000.

For example, the polypeptoid provided in the present invention can be a polysarcosine represented by Formula (II):

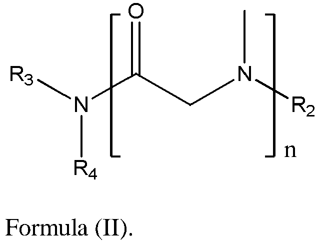

Among them, R₂, R₃ and R₄ are as defined above.

Alternatively, the polypeptoid provided in the present invention can be a polysarcosine represented by Formula (III):

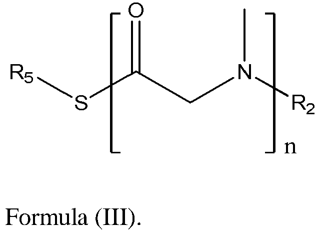

The polypeptoid provided in the present invention, such as polysarcosine (pSar), has a high DP (up to approximately 550-8,000) that is not reported previously, and a narrow molecular weight distribution (with a dispersion less than approximately 1.08), and exhibits excellent material properties such as thermal stability. They can be polymerized in a controlled manner has a fast polymerization rate, and can be synthesized under ambient temperature and humidity conditions, with mild conditions and simple operation.

Another embodiment of the present invention further discloses a method for preparing polypeptoid, comprising: polymerizing the compound of Formula (IV): 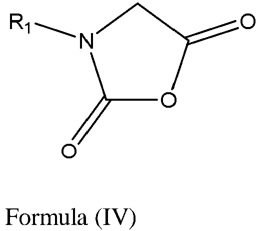 in the presence of an initiator, a catalyst and a solvent to form the compound of Formula (I): 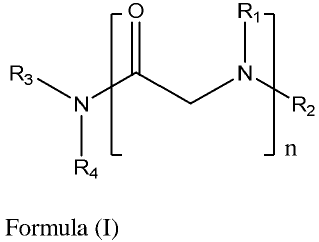 wherein,
R₁ is selected from C₁-C₁₂ alkyl, C₁-C₁₂ halo alkyl, C₃-C₁₂ heterocyclyl, C₆-C₁₀ aryl, and C₆-C₁₀ heteroaryl, wherein the C₁-C₁₂ alkyl, C₁-C₁₂ halo alkyl, C₃-C₁₂ heterocyclyl, C₆-C₁₀ aryl, and C₆-C₁₀ heteroaryl are optionally unsubstituted or substituted with one to three substituents selected from halogen, C₁-C₆ alkyl, C₁-C₆ alkyloxy, C₆-C₁₀ aryl, C₆-C₁₀ aryloxy, C₆-C₁₀ heteroaryl, and C₆-C₁₀ heteroaryloxy, wherein the heterocyclyl, heteroaryl, and heteroaryloxy optionally comprises one to three heteroatoms independently selected from N, S, and O;
R₂ is selected from H, C₁-C₁₂ alkyl carbonyl, C₁-C₁₂ alkyloxycarbonyl, C₇-C₁₁ arylcarbonyl, and C₇-C₁₁aryloxycarbonyl, wherein the C₁-C₁₂ alkyl carbonyl, C₁-C₁₂ alkyloxycarbonyl, C₇-C₁₁ aryl, and C₇-C₁₁ aryloxycarbonyl are optionally unsubstituted or substituted with one to three substituents selected from halogen, C₁-C₆ alkyl, C₁-C₆ alkyloxy, C₆-C₁₀ aryl, C₆-C₁₀aryloxy, C₆-C₁₀ heteroaryl, and C₆-C₁₀ heteroaryloxy, wherein the heteroaryl or heteroaryloxy optionally comprises one to three heteroatoms independently selected from N, S and O;
A is selected from:
   (1) -NR₃R₄, wherein R₃ and R₄ are each independently selected from H, C₁-C₁₂ alkyl, C₁-C₁₂ halo alkyl, C₃-C₁₂ heterocyclyl, C₆-C₁₀ aryl, C₆-C₁₀ heteroaryl and Rₐ-(CH₂CH₂O)ₘ-CH₂CH₂-,
      wherein the C₁-C₁₂ alkyl, C₁-C₁₂ halo alkyl, C₃-C₁₂ heterocyclyl, C₆-C₁₀ aryl, and C₆-C₁₀ heteroaryl are optionally unsubstituted or substituted with one to three substituents selected from halogen, C₁-C₆ alkyl, C₁-C₆ alkyloxy, C₆-C₁₀ aryl, C₆-C₁₀aryloxy, C₆-C₁₀ heteroaryl, and C₆-C₁₀ heteroaryloxy, wherein the heterocyclyl, heteroaryl or heteroaryloxy optionally comprises one to three heteroatoms independently selected from N, S and O, and
      wherein Rₐ is CH₃O- or NH₂-, and m is an integer ranging from 1 to 10,000, wherein one or some or all of m repeating units -(CH₂CH₂O)- are unsubstituted or optionally substituted with C₁-C₆ alkyl or C₁-C₆ alkyloxy,
      with the proviso that R₃ and R₄ are not both H; and
   (2) -SR₅, wherein R₅ is selected from C₆-C₁₀ aryl and C₆-C₁₀ heteroaryl, wherein the C₆-C₁₀ aryl, and C₆-C₁₀ heteroaryl group is optionally unsubstituted or substituted with one to three substituents selected from halogen, hydroxyl, carboxyl, nitro, amino, cyano, mercapto, C₁-C₆ alkyl, and C₁-C₆ alkyloxy, wherein the heteroaryl optionally comprises one to three heteroatoms independently selected from N, S and O;
n is an integer ranging from 550 to 8,000.

In some aspects, n can be greater than or equal to 20, 50, 100, 200, 300, 400, 450, 500, or 550, etc., and can be less than or equal to 8,000, 7,500, 7,000, 6,500, 6,000, 5,500, 5,000, 4,500, 4,000, 3,500, 3,000, 2,500, 2,000, 1,500 or 1,000, etc. Alternatively, n can be within the range of values formed between any two thereof.

As used herein, the term "initiator" refers to a substance capable of initiating the polymerization of monomers. In some aspects, suitable initiators for use in the preparation methods provided in the present invention can be compounds containing primary amino (-NH₂) or secondary amino (-NHR) or aryl thiol (Ar-SH) or aryl(tri alkyl silyl) thioethers. For example, the initiator can be selected from R₃R₄N-R_{b}or R₅-SR_{b}, wherein R₃, R₄ and R₅ are as defined above, and R_{b} is selected from H and tris(C₁-C₆ alkyl )silyl. In some exemplary aspects, the initiator can be selected from propylamine, butylamine, pentylamine, n-hexylamine, cyclopentylamine, cyclohexylamine, aniline, benzylamine, propylenediamine, butylamine, hexamethylenediamine, 1,8-diamino-3,6-dioxane, tris(2-aminoethyl)amine, and Rₐ-(CH₂CH₂O)ₘ-CH₂CH₂NH₂ or any combination of one or more thereof, wherein Rₐ is as defined above. Alternatively, the initiator can be selected from AR-SH or AR-S-Si(C₁-C₆ alkyl )₃, wherein AR is phenyl or naphthyl which is unsubstituted or substituted with one to three substituents independently selected from halogen, C₁-C₆ alkyl groups, and C₁-C₆ alkyloxy. Further, e.g., the initiator can be selected from benzylamine, p-methylthiophenol, and trimethyl(phenylthio)silane, etc.

As used herein, the term "catalyst" refers to a substance that increases the reaction rate without changing the total standard Gibbs free energy change of the reaction (according to the IUPAC definition). It can also be described as a substance that can increase the rate of chemical reaction without changing the chemical equilibrium, and but does not have any change in mass and chemical properties before and after the chemical reaction. In some aspects, suitable catalysts for use in the methods provided in the present invention can be carboxylic acids. For example, the catalyst can be selected from C₁-C₁₂ alkyl carboxylic acids or benzoic acid, wherein the benzoic acid is unsubstituted or optionally substituted with one to three independently selected from halogen, C₁-C₆ alkyl, C₁-C₆ alkoxy. For example, the catalyst can be benzoic acid or pivalic acid. The addition of such catalysts significantly accelerates the polymerization process and increases the selectivity of polymerization relative to monomer isomerization.

As used herein, the term "solvent" refers to an inert medium (gas, liquid, or solid) in which a solid, liquid, or gaseous solute can be dissolved to form a solution, which can be divided into, e.g., organic solvents and inorganic solvents. In some aspects, suitable solvent for use in the method of the present invention can be an organic solvent. For example, the solvent can be selected from dichloromethane, chloroform, nitrobenzene, acetonitrile, dimethylformamide, a mixture of any one or more thereof, or any other suitable solvent. Further, e.g., the solvent can be methylene chloride or the like. Using an organic solvent within the above range as a solvent in the method of the present invention can effectively achieve molecular weight control, increase reaction rate, and suppress side reactions.

In some aspects of the present invention, the catalyst and the initiator can be used in any molar ratio. For example, the molar ratio of the catalyst to the initiator can be in the range of (0.1-100):1, e.g., in the range of (0.5-10):1, e.g., in the range of (2-6):1, e.g., in the range of (3-5):1, etc.

In other aspects, the compound of Formula (IV) and the initiator can be used in any molar ratio. For example, the molar ratio of the compound of Formula (IV) to the initiator can be in the range of (1-10,000):1. For example, the molar ratio of the compound of Formula (IV) to the initiator can be 20:1, 50:1, 100:1, 200:1, 500:1, 1,000:1, 2,000:1, 5,000:1, 10,000:1, or can be within the range formed between any two thereof.

In other aspects, the compound of Formula (IV), the initiator and the catalyst can be used in any molar ratio. For example, the molar ratio of the compound of Formula (IV) to the initiator and the catalyst can be 20:1:5, 50:1:5, 100:1:5, 200:1:5, 500:1:5, 1,000:1:5, 2,000:1:5, 5,000:1:5, 10,000:1:5, or can be within the range formed between any two thereof.

Without wishing to be bound by theory, it is believed that in the preparation method of the present invention, the compound of Formula (IV) undergoes a ring-opening reaction in the presence of a carboxylic acid catalyst via a nucleophilic addition-elimination process of the active hydrogen on the N atom in the initiator or the active hydrogen on the N atom at the end of the polymer chain and the carbonyl group, followed by decarboxylation, thereby forming a polymerized product, wherein the elimination of the tetrahedral intermediate-rather than the nucleophilic addition reaction- is the rate-determining step of the entire polymerization. The carboxylic acid catalyst reduces the charge separation during the reaction through hydrogen bond bridging and assists in the proton transfer process in the form of proton shuttles.

In some aspects, the method of the present invention can be carried out at ambient temperature and humidity without need for anhydrous treatment of the equipment and materials used in the polymerization process.

The polymerization method provided in the present invention exhibits excellent controllable polymerization characteristics and has a fast polymerization rate. Taking the synthesis of pSar as an example, a single feed enables the synthesis of narrow-dispersity pSar having a DP ranging from approximately 20 to 5,800 (molecular weight approximately 1.6 to 414 kDa). The synthesized polymer has "living" chain ends, allowing for several chain extension reactions to achieve a maximum molecular weight of about 586 kDa (DP of about 8,200), which is about 16 times higher than the previously reported record. Moreover, the polymerization method provided in the present invention can be carried out in an ordinary solvent containing water under air, with mild conditions and simple operation, resulting in high molecular weight pSar that has been previously unreported. Research indicated that this type of high molecular weight pSar has excellent material properties such as thermal stability, and can be processed to obtain high-strength transparent films.

### Example

Hereinafter the embodiments of the present application will be described in detail with reference to the examples. However, those skilled in the art will understand that the following embodiments are merely illustrative of the present application, but should not be construed as limiting the scope of the present application. If the specific conditions are not specified in the examples, the experiments should be carried out according to conventional conditions or the conditions recommended by the manufacturer. If the manufacturer of the reagents or instruments used is not indicated, they are all conventional commercially available products. Unless otherwise specified, all amounts listed are expressed in parts by weight based on total weight. The present application should not be construed as limiting to the specific examples described.

### Example 1: Ring-opening polymerization of Sar-NCA initiated by amine initiator

In this example, sarcosine NCA (Sar-NCA) was used as the monomer, benzoic acid as the catalyst, anhydrous dichloromethane (DCM) as the solvent, and benzylamine as the initiator. The polymerization reaction was carried out in a glovebox under nitrogen atmosphere and at room temperature, according to the following scheme and Table 1. Among them, the reaction device and materials were not subjected to anhydrous pretreatment. Among them, [M]₀ represents the initial concentration of monomer, [I]₀ represents the initial concentration of initiator, [A]₀ represents the initial concentration of carboxylic acid catalyst, *M*ₙ^{cal} represents the theoretically calculated molecular weight of the product, *M*ₙ^{obt} represents the measured molecular weight of the product, and Ð represents the dispersity of the obtained product.

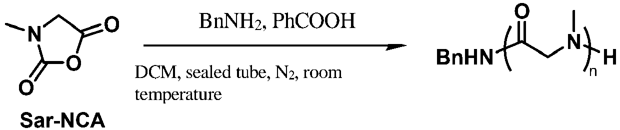

**Table 1. Ring-opening polymerization of Sar-NCA catalyzed with benzoic acid ^{a}**

| **Entry** | **[M]₀** | **[M]₀/[I]₀/[A]₀** | **Time** | ***M*ₙ^{cal} (kDa)*^{b}*** | ***Mₙ*^{obt} (kDa)C** | ***DC*** |
|---|---|---|---|---|---|---|
| 1 | 0.2 M | 50/1/0 | 2h | 3.7 | 5.2 | 1.013 |
| 2 | 0.2 M | 20/1/5 | < 15 min | 1.5 | 1.6 | 1.001 |
| 3 | 0.2 M | 50/1/5 | < 15 min | 3.7 | 4.3 | 1.014 |
| 4 | 0.2 M | 100/1/5 | < 15 min | 7.2 | 8.9 | 1.006 |
| 5 | 0.2 M | 200/1/5 | 23 min | 14.3 | 17.5 | 1.012 |
| 6 | 0.2 M | 500/1/5 | < 1.5 h | 35.6 | 41.6 | 1.010 |
| 7 | 0.2 M | 1,000/1/5 | 2.5 h | 71.2 | 74.3 | 1.008 |
| 8 | 0.4 M | 1,000/1/5 | 1.5 h | 71.2 | 78.6 | 1.010 |
| 9 | 0.4 M | 1500/1/5 | 1.5 h | 106.7 | 111.8 | 1.008 |
| 10 | 0.4 M | 2,000/1/5 | 2.5 h | 142.3 | 136.9 | 1.004 |
| 11 | 0.4 M | 2,000/1/0 | 13 h | 142.3 | 84.5 | 1.137 |
| 12 | 0.4 M | 5,000/1/5 | 16.5 h | 355.5 | 369.7*^{d}* | 1.19*^{d}* |
| 13 | 0.8 M | 1,0000/1/5 | 16.5 h | 710.9 | 414.1*^{d}* | 1.31*^{d}* |

| | | | | | | |
|---|---|---|---|---|---|---|
| *^{a}* The conversion of each monomer, except No. 11, was above 95%, as measured by infrared spectroscopy. *^{b}* The calculated molecular weight was calculated based on the feed ratio. *^{c}* Measured by size exclusion chromatography (SEC) equipped with a multi-angle laser scattering (MALLS) detector, using dimethylformamide containing 0.1 M LiBR as the mobile phase. As measured, the dn/dC (658 nm) of the pSar was 0.079 mL/g. *^{d}* Measured by SEC against polystyrene standards. | | | | | | |

In this example, the inventor found that the polymerization system with a [M]₀/ [I]₀/ [A]₀ (the initial concentrations of monomer, initiator, and benzoic acid catalyst, respectively) molar feed ratio of 50/1/5 achieved complete monomer conversion within 15 min (as monitored by infrared spectroscopy) at a monomer concentration of 0.2 M, yielding pSar with narrow dispersity and molecular weight consistent with expectations (see Table 1, Entry 3). In contrast, the control without benzoic acid required 2 hours to react completely ( see Table 1, Entry 1). It could be seen that using a catalyst such as benzoic acid in the preparation method of the present invention significantly accelerated the reaction rate of Sar-NCA ring-opening polymerization.

Next, the inventor proceeded to try polymerization process with different monomerinitiator ratios (see Table 1, Entries 2 to 10; and Fig. 1, A and B). Moreover, at a monomer concentration of 0.2 M, the polymerization systems with [M]₀/[I]₀/[A]₀ ranging from (20-1,000):1:5 all gave good polymerization results, although the reaction time significantly increased (from 15 min to 2.5 h) with the increase of feed ratio. Increasing the initial monomer concentration from 0.2 M to 0.4 M effectively shortened the reaction time of the 1,000/1/5 system from 2.5 h to 1.5 h without affecting the molecular weight control of the polymerization. The dispersion (*Ð*) was typically below 1.01 (see Table 1, Entry 8).

With the benzoic acid catalysis, the polymerization with [M]₀/[I]₀/[A]₀ of 2,000:1:5 could be rapidly completed within 2.5 h, and the measured molecular weight of the resulting product pSar was 136.9 kDa (the calculated molecular weight is 142.3 kDa), with *Ð*=1.001 (see Table 1, Entry 10). In contrast, without the benzoic acid catalysis, the polymerization system with a [M]₀/[I]₀/[A]₀ ratio of 2,000:1:5 only achieved a conversion of 75% even after being reacted overnight, and the SEC curve of the polymer product showed a broad molecular weight distribution and severe tailing (see Table 1, Entry 11; and Fig. 1C).

To determine the upper limit of molecular weight for benzoic acid-catalyzed polymerization, the inventors proceeded to increase the [M]₀/[I]₀/[A]₀ ratio to 5,000:1:5. It was found that the monomers could still be completely converted within 16.5 h (see Table 1, Entry 12), and the polymerization maintained excellent molecular weight control (*M*ₙ^{obt}~ 369.7 kDa in relation to *M*ₙ^{cal}~ 355.5 kDa; *Ð*=1.19).

Subsequently, we proceeded to increase [M]₀/ [I]₀ to 10,000, while increasing the monomer concentration to 0.8 M (see Table 1, Entry 13). Complete conversion of the monomer was successfully achieved after being reacted overnight, but the molecular weight of the polymerized product was significantly lower than expected (*M*ₙ^{obt}~ 414.1 kDa in relation to *M*ₙ^{cal}~ 710.9 kDa, *Ð*=1.31). It was speculated that this deviation may be caused by trace impurities in the monomer.

Overall, the above Sar-NCA polymerization system catalyzed by benzoic acid has fast kinetics and excellent molecular weight control. The polymer molecular weight increases linearly with the feed ratio of [M]₀/[I]₀/[A]₀ and has a wide linear range, covering the DP of 20 to 5,000 (Fig. 1, A and B). In contrast, the rapid and controllable synthesis of pSar having a DP of 600-5,000 has not been reported in the prior art.

Furthermore, the above advantages prompted the inventors to conduct in-depth research on the chemical rules behind the polymerization of Sar-NCA catalyzed by benzoic acid. To evaluate the controllable/active characteristics of polymerization, the inventors studied the relationship between the monomer conversion and the molecular weight of the produced pSar in a system with [M]₀/[I]₀/[A]₀ of 500/1/5. The results showed that the molecular weight of pSar increased linearly with the conversion, conforming to the characteristics of controlled chain polymerization (Fig. 1, D and E). In a system with [M]₀/[I]₀/[A]₀ of 1,000/1/5 ([M]₀=0.2 M), the inventor proceeded with chain extension by adding 1,000 equivalents of monomer relative to the initiator. Infrared spectroscopy monitoring showed that the newly added monomer was successfully and completely converted within 4 h. Size exclusion chromatography (SEC) characterization showed a significant overall shift in the curves before and after chain extension, and the molecular weight of the chain-extended product was also as expected (see Fig. 1, F; Table 1, Entry 1, *M*ₙ^{obt} ~ 139.3 kDa versus *M*ₙ^{cal} ~ 142.3 kDa, and *Ð*=1.018). The same chain extension reaction can be repeated on the original bas is (see Fig. 1, F; Table 1, Entry 2, *M*ₙ^{obt}~ 192.8 kDa versus *M*ₙ^{cal}~ 213.3 kDa, *Ð*=1.011), which strongly demonstrates that the end of the growing chain always maintains reactivity during the polymerization process, supporting that this system is a living polymerization. In addition, when the polymerization reaction was carried out with HPLC-grade DCM under air without drying treatment as the solvent, the characteristics of fast polymerization rate and controllable molecular weight are still retained, indicating that the polymerization has good water and oxygen tolerance (see Fig. 1, G; Table S1). Matrixassisted laser desorption time-of-flight mass spectrometry (MALDI-TOF MS) characterization showed that the polymerization product with [M]₀/ [I]₀ feed ratio of 50 (Table 1, Entry 3) exists entirely in the form of benzylamine-initiated polymer chains, while the ω end is a secondary amine, indicating good end-group fidelity (Fig. 1, H).

**Table S1. Ring-opening polymerization of Sar-NCA in HPLC-grade DCM solvent under air. ^{a}**

| 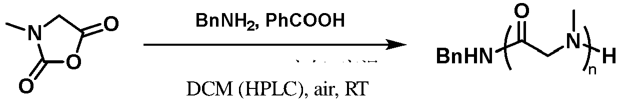 | | | | | | |
|---|---|---|---|---|---|---|
| Entry | **[M]₀** | **[M]₀/[I]₀/[A]₀** | Time | ***M*ₙ^{cal} (kDa)*b*** | ***M*ₙ^{obt} (kDa)C** | ***DC*** |
| 1 | 0.2 M | 100/1/5 | 18 min | 7.2 | 9.1 | 1.08 |
| 2 | 0.2 M | 200/1/5 | 27 min | 14.3 | 17.1 | 1.05 |
| 3 | 0.2 M | 500/1/5 | 70 min | 35.6 | 43.2 | 1.03 |
| 4 | 0.2 M | 1000/1/5 | 140 min | 71.2 | 69.3 | 1.02 |

| | | | | | | |
|---|---|---|---|---|---|---|
| *^{a}* The conversion of each monomer was above 95%, as measured by infrared spectroscopy. *^{b}* The calculated molecular weight was calculated based on the feed ratio. *^{c}* Measured by SEC equipped with a multi-angle laser scattering (MALLS) detector, using dimethylformamide containing 0.1 M LiBR as the mobile phase. | | | | | | |

First-order kinetics are another characteristic of controlled living polymerization. To study the mathematical form of the polymerization rate and the correspondence between the apparent rate constant *k_{obs}* and the initiator concentration [I]₀ and the benzoic acid concentration [A]₀, the inventor used a fiber-optic Fourier transform infrared spectrometer to monitor in situ the monomer conversion of different polymerization systems. The kinetic experiments revolve around the polymerization reaction with [M]₀/[I]₀ of 200.

Under the same experimental conditions, the experimental group with [M]₀/[I]₀/[A]₀ of 200/1/5 illustrated a significantly faster reaction rate than the control group without acid (Fig. 2, A). The former only took 17 min to reach 95% monomer conversion, while the latter took about 5 h. The 200/1/5 group showed typical first-order kinetic characteristics, wherein ln([M]₀/[M₀) has a good linear relationship with the reaction time. It was calculated that the apparent first-order rate constant of polymerization *k_{obs}* is (30.9 ± 0.3) × 10⁻⁴ s⁻¹(Fig. 2, B). In contrast, the acid-free group showed complex multi-stage kinetics. The polymerization was slow in the early stage of the reaction and then gradually accelerated, which could not be fitted by a simple kinetic equation. Fitting was conducted on the part with the conversion of 60% - 40% in the acid-free group, *k_{obs}* was calculated as (1.95 ± 0.02) × 10⁻⁴s⁻¹. It can be seen that the addition of benzoic acid results in an increase in the apparent rate by 15 times.

Subsequently, the inventor studied the relationship between *k_{obs}* and [I]₀ and [A]₀ by the same method. Keeping [A]₀ constant, varying [I]₀ does not affect the first-order kinetics of polymerization (Fig. 2, C), and *k_{obs}* shows a good linear relationship with [I]₀ (Fig. 2, D; Table S2), indicating that the polymerization rate is linearly dependent on the active center concentration ([I]₀). When [I]₀ is kept constant and [A]₀ is varied, the polymerization still maintained the first-order kinetics (Fig. 2, E). As [A]₀ increases, it can be observed that *k_{obs}* first increases and then decreases (Fig. 2, F; Table S2). When [I]₀/[A]₀ is 1/3, *k_{obs}* reaches the maximum of (33.1 ± 0.2) × 10⁻⁴s⁻¹, slightly higher than the group where [I]₀/[A]₀ is 1/5. This phenomenon may be due to the dual role of carboxylic acid in the NCA polymerization process. On the one hand, carboxylic acid reduces the activation energy of the polymerization reaction and accelerates polymerization; and on the other hand, carboxylic acid and amine active ends tend to form more stable hydrogen bond complexes or ion pairs, which reduces the concentration of active centers and inhibits the polymerization rate. When the concentration of carboxylic acid is low, the catalytic effect dominates, while when the concentration is too high, the effects of acid-base balance begin to show up.

**Table S2. Apparent rate constants under different experimental conditions (k_{obs}).**

| ***a*** | | |
|---|---|---|
| Entry | **[M]₀/[I]₀/[A]₀** | ***k_{obs}*(10-4 s-1)** |
| 1 | 200/0.5/5 | 11.5 ± 0.1 |
| 2 | 200/0.75/5 | 19.1 ± 0.1 |
| 3 | 200/1/5 | 30.9 ± 0.3 |
| 4 | 200/1.5/5 | 44.5 ± 0.5 |
| 5 | 200/1/0.5 | 18.0 ± 0.1 |
| 6 | 200/1/1 | 22.8 ± 0.2 |
| 7 | 200/1/3 | 33.1 ± 0.2 |
| 8 | 200/1/10 | 21.3 ± 0.2 |

| | | |
|---|---|---|
| *^{a}* All experiments were conducted in DCM at room temperature (25 ± 1 °C), with a monomer concentration [M]₀ of 0.2 M, and benzoic acid as the catalyst. | | |

### Example 2: Effect of Carboxylic Acid Chemical Structure on Carboxylic Acid-Catalyzed Sar-NCA Ring-Opening Polymerization

Based on the above experimental results of Sar-NCA ring-opening polymerization catalyzed by benzoic acid, the inventors anticipated that carboxylic acids with different structures and acidities can generally catalyze such polymerization process. By keeping [M]₀/[I]₀/[A]₀ constant of 200/1/5, the inventors systematically monitored the polymerization processes catalyzed by a series of substituted benzoic acids and alkyl carboxylic acids, determined their first-order kinetic behaviors, and calculated *k_{obs}* (Fig. 3, A; Fig. 8). The results show that the polymerization rate is strongly related to the acidity of the carboxylic acid catalyst. Within the range of carboxylic acids studied in the experiment, *k_{obs}* has a good linear relationship with pKa. The weaker the acidity, the higher *k_{obs}* (Fig. 3, B). Among them, pivalic acid showed the highest *k_{obs}* of up to (100.6 ± 1.3)×10⁻⁴s⁻¹, which was three times that of benzoic acid under the same conditions and more than 50 times that of the acid-free control group. Moreover, carboxylic acids with different structures will not significantly affect the molecular weight distribution of the polymerization product. The SEC curves of all carboxylic acid-catalyzed polymerization products showed a symmetrical bell-shaped narrow distribution, and the controllability was significantly better than that of the acid-free group with tailing (Fig. 3, C). It was speculated that the rate reduction caused by a stronger carboxylic acid acidity is essentially the same as that resulting from an increased carboxylic acid concentration. Both of the phenomena were attributed to a decrease in active center concentration caused by the formation of a hydrogenbonded complex (or ion pair) between carboxylic acid and the amine active center. The more acidic a carboxylic acid is, the more favorable it is thermodynamically to form a complex. In contrast, the catalytic function of the carboxylic acid is likely to be weakly related to acidity.

### Example 3: Synthesis of high molecular weight pSar by continuous chain extension polymerization catalyzed by pivalic acid

Through the above-mentioned screening of carboxylic acid catalyst structures, the inventors identified pivalic acid with stronger catalytic function. A more effective catalyst imparts a faster polymerization rate. Therefore, the inventor believed that it was possible to obtain pSar having a higher molecular weight by using pivalic acid to catalyze the polymerization of Sar-NCA. To this end, the inventor carried out continuous chain extension polymerization, adding an NCA with 2,000 equivalents to the initiator into the system each time, and monitored the reaction progress by IR. Upon the complete monomer conversion, a fresh batch of monomers was immediately added (Fig. 4, A). The first two batches of monomers were each completely converted in merely 2 hours, the third batch took slightly longer (4 hours), and the last batch required overnight reaction. SEC characterization showed that each chain extension resulted in an overall forward shift of the chromatographic peak curve (Fig. 4, B), with a linear increase in molecular weight, ultimately yielding a high molecular weight pSar of up to 590 kDa, conforming to the theoretical molecular weight (Fig. 4, C). Compared with the 410 kDa obtained from a one-time addition of benzoic acid, the continuous chain extension polymerization catalyzed by pivalic acid further increased the upper limit of the molecular weight of the obtained pSar. The product obtained from continuous chain extension still maintains the feature of narrow distribution (*Ð*=1.25), further demonstrating the controllable living polymerization characteristics of this polymerization system.

### Example 4: Study on the Material Properties of pSar

Upon the synthesis of the high molecular weight pSar, the inventors further investigated the changes in material properties brought about by the increase in molecular weight.

Previously, the thermal properties of low molecular weight pSar bulk materials have been reported. However, the mechanical properties of pSar as a bulk material have rarely been studied. Specifically, the glass transition temperature *T*_{g} and thermal decomposition temperature *T*_{d} of pSar₁₀₀ having a DP of 100 are reported to be 143 °C and 250 °C, respectively, and both will further decrease as the DP decreases. The inventor selected two samples, pSar₅₀₀ having a DP of 500 and pSar_{5,000} having a DP of 5,000 synthesized by carboxylic acid catalysis method, and measured their *T* _{d} and *T*_{g} by thermogravimetric analysis (TGA) and differential scanning calorimetry (DSC). (Fig. 5, A and B). The thermal stability of both pSar₅₀₀ and pSar_{5,000} was significantly superior to that of the pSar₁₀₀ reported in the literature, with T_{d,5%} values reaching 315 °C and 339 °C, respectively. In contrast, no significant difference was observed in their T_{g} (143 °C and 149 °C, respectively), although a slight increase was noted for the latter.

pSar has good water solubility, and both samples pSar₅₀₀ and pSar_{5,000}can be dissolved in water at a concentration of greater than or equal to 50 mg/mL. Using the aqueous solution casting method, pSar with the above two molecular weights can be prepared into thin films (Fig. 5, C). The pSar film is colorless and transparent, and exhibits excellent mechanical strength in uniaxial tensile experiments (Fig. 5, D). pSar_{5,000} exhibits superior modulus and ultimate tensile strength compared to pSar₅₀₀, with a Young's modulus of up to 3.0 ± 0.5GPa and an ultimate tensile strength of 60 ± 3 MPa for the former, while the latter shows only 1.6 ± 0.3 GPa and 27 ± 6 MPa. In summary, the increase in molecular weight greatly improves the thermal stability and mechanical strength of pSar bulk materials, laying the foundation for the subsequent development of pSar-based materials.

### Example 5: Ring-opening polymerization of pSar initiated by thiophenol initiator

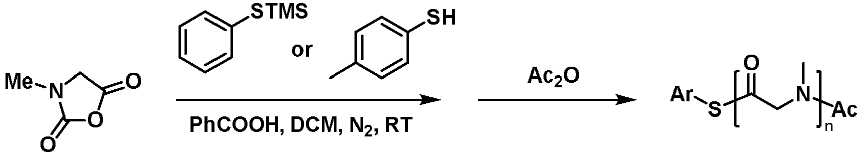

At a monomer concentration of 0.4 M, trimethyl(phenylthio)silane (PhSTMS) and p-methylthiophenol (p-MePhSH) were used as initiators, and benzoic acid as a catalyst. With an initial monomer:initiator:catalyst feed ratio of 500:1:5, the polymerization reaction was complete within 0.5 h, and yielded pSar with molecular weights of 47.8 kDa (PDI<1.01, see Table 2, Entry 1) and 47.0 kDa (PDI<1.01, see Table 2, Entry 2), respectively. The polymer can be stably stored when capped with a large excess of acetic anhydride. The SEC spectrogram of the two polymers obtained are shown in Fig. 6. Subsequently, the trimethylsilylthiophenol-initiated polymerization under different monomer initiator ratios (see Table 2, Entry 3-5) were tried. All ratios gave high molecular weight pSar with narrow distribution, and the polymerized molecular weight proceeded to increase with the monomer initiator ratio. At present, high molecular weight pSar of up to 79.8 kDa with a thiophenol ester at the C-terminus (see Table 2, Entry 5) can be synthesized, which cannot be obtained by other existing technologies. Fig. 7 illustrates the SEC spectrograms of these polymers, in which (A), (B) and (C) correspond to the polymers Entry 3-5 in Table 2, respectively.

**Table 2. Ring-opening polymerization of Sar-NCA initiated by thiophenol initiator ^{a}**

| Entry | [M]₀ | Initiator | [M]₀/[I]₀/[A]₀ | Time | *M*ₙ^{obt} (kDa)^{b} | *Ð^{b}* |
|---|---|---|---|---|---|---|
| 1 | 0.4 M | PhSTMS | 500/1/5 | 0.5 h | 47.8 | < 1.01 |
| 2 | 0.4 M | p-MePhSH | 500/1/5 | 0.5 h | 47.0 | < 1.01 |
| 3 | 0.4 M | PhSTMS | 200/1/5 | 2 h | 22.6 | 1.01 |
| 4 | 0.4 M | PhSTMS | 400/1/5 | 2 h | 38.1 | < 1.01 |
| 5 | 0.4 M | PhSTMS | 800/1/5 | 2 h | 79.8 | < 1.01 |

| | | | | | | |
|---|---|---|---|---|---|---|
| *^{a}* The conversion of each monomer was above 95%, as measured by infrared spectroscopy. *^{b}* Measured by SEC equipped with a multi-angle laser scattering (MALLS) detector, using dimethylformamide containing 0.1 M LiBR as the mobile phase. | | | | | | |

In summary, the present invention provides a controlled living polymerization method of amino acid NCA using carboxylic acid as a catalyst and DCM as a solvent, as well as the resulting polypeptoid. This method features mild polymerization conditions and fast rate, and enables the controllable synthesis of polypeptoids with degrees of polymerization ranging from 20 to 8,000. Moreover, for target polymers having a degree of polymerization below 1,000, nonanhydrous DCM and ambient air conditions are sufficient to meet the experimental requirements. Catalytically significant amounts of carboxylic acids can significantly accelerate polymerization, and the acceleration effect is related to the chemical structure of the carboxylic acid. The weaker the acid, the stronger the catalytic effect. High molecular weight peptides exhibit superior properties in thermal stability and mechanical properties compared to low molecular weight peptides, and can be processed into high-strength transparent films. This work provides a simple and efficient method for preparing peptides, laying the foundation for further development of peptide materials.

The foregoing are the only exemplary embodiments of the present invention, and are not used to limit the scope of the present invention, which is determined by the appended claims.

## Claims

1. A polypeptoid **characterized by** having a degree of polymerization (DP) in a range of 550 to 8,000.

2. The polypeptoid according to claim 1 wherein the polypeptoid has a DP in a range of 550 to 1,000.

3. The polypeptoid according to claim 2 wherein the polypeptoid has a dispersion of less than 1.09.

4. The polypeptoid according to claim 1 wherein the polypeptoid has a structure shown in Formula (I): 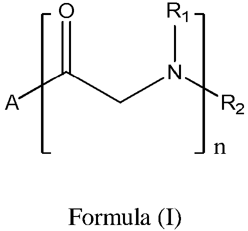 wherein,
R₁ is selected from C₁-C₁₂ alkyl, C₁-C₁₂ halo alkyl, C₃-C₁₂ heterocyclyl, C₆-C₁₀ aryl, and C₆-C₁₀ heteroaryl, wherein the C₁-C₁₂ alkyl, C₁-C₁₂ halo alkyl, C₃-C₁₂ heterocyclyl, C₆-C₁₀ aryl, and C₆-C₁₀ heteroaryl are optionally unsubstituted or substituted with one to three substituents selected from halogen, C₁-C₆ alkyl, C₁-C₆ alkyloxy, C₆-C₁₀ aryl, C₆-C₁₀ aryloxy, C₆-C₁₀ heteroaryl, and C₆-C₁₀ heteroaryloxy, wherein the heterocyclyl, heteroaryl, and heteroaryloxy optionally comprises one to three heteroatoms independently selected from N, S, and O;
R₂ is selected from H, C₁-C₁₂ alkyl carbonyl, C₁-C₁₂ alkyloxycarbonyl, C₇-C₁₁ arylcarbonyl, and C₇-C₁₁aryloxycarbonyl, wherein the C₁-C₁₂ alkyl carbonyl, C₁-C₁₂ alkyloxycarbonyl, C₇-C₁₁ aryl, and C₇-C₁₁ aryloxycarbonyl are optionally unsubstituted or substituted with one to three substituents selected from halogen, C₁-C₆ alkyl, C₁-C₆ alkyloxy, C₆-C₁₀ aryl, C₆-C₁₀aryloxy, C₆-C₁₀ heteroaryl, and C₆-C₁₀ heteroaryloxy, wherein the heteroaryl or heteroaryloxy optionally comprises one to three heteroatoms independently selected from N, S and O;
A is selected from:
-NR₃R₄, wherein R₃ and R₄ are each independently selected from H, C₁-C₁₂ alkyl, C₁-C₁₂ halo alkyl, C₃-C₁₂ heterocyclyl, C₆-C₁₀ aryl, C₆-C₁₀ heteroaryl and Rₐ-(CH₂CH₂O)ₘ-CH₂CH₂-,
wherein the C₁-C₁₂ alkyl, C₁-C₁₂ halo alkyl, C₃-C₁₂ heterocyclyl, C₆-C₁₀ aryl, and C₆-C₁₀ heteroaryl are optionally unsubstituted or substituted with one to three substituents selected from halogen, C₁-C₆ alkyl, C₁-C₆ alkyloxy, C₆-C₁₀ aryl, C₆-C₁₀aryloxy, C₆-C₁₀ heteroaryl, and C₆-C₁₀ heteroaryloxy, wherein the heterocyclyl, heteroaryl or heteroaryloxy optionally comprises one to three heteroatoms independently selected from N, S and O, and
wherein Rₐ is CH₃O- or NH₂-, and m is an integer ranging from 1 to 10,000, wherein one or some or all of m repeating units -(CH₂CH₂O)- are unsubstituted or optionally substituted with C₁-C₆ alkyl or C₁-C₆ alkyloxy,
with the proviso that R₃ and R₄ are not both H; and
(2) -SR₅, wherein R₅ is selected from C₆-C₁₀ aryl and C₆-C₁₀ heteroaryl, wherein the C₆-C₁₀ aryl, and C₆-C₁₀ heteroaryl group is optionally unsubstituted or substituted with one to three substituents selected from halogen, hydroxyl, carboxyl, nitro, amino, cyano, mercapto, C₁-C₆ alkyl, and C₁-C₆ alkyloxy, wherein the heteroaryl optionally comprises one to three heteroatoms independently selected from N, S and O;
n is an integer ranging from 550 to 8,000.

5. The polypeptoid according to claim 4, wherein,
R₁ is selected from C₁-C₆ alkyl;
R₂ is selected from H, C₁-C₁₂ alkyl carbonyl, and C₇-C₁₁ arylcarbonyl.

6. The polypeptoid according to claim 5, wherein,
A is -NR₃R₄,
wherein one of R₃ and R₄ is H, and the other is selected from phenyl-C₁-C₄ alkyl, wherein the phenyl is optionally unsubstituted or substituted with one to three substituents selected from halogen, C₁-C₄ alkyl and C₁-C₄ alkyloxy.

7. The polypeptoid according to claim 6, wherein the polypeptoid is polysarcosine represented by Formula (II):

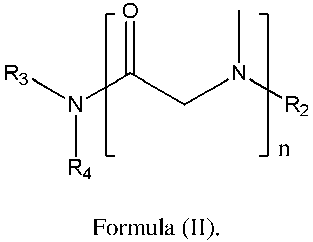

8. The polypeptoid according to claim 5, wherein,
A is -SR₅,
wherein R₅ is phenyl, wherein the phenyl is optionally unsubstituted or substituted with one to three substituents selected from halogen, C₁-C₆ alkyl or C₁-C₆ alkyloxy.

9. The polypeptoid according to claim 8, wherein the polypeptoid is polysarcosine represented by Formula (III):

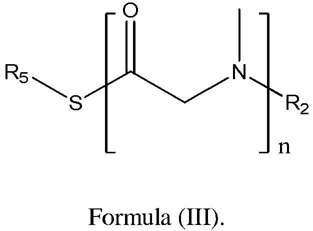

10. A method for preparing a polymeric peptide, **characterized by** comprising:
concentrating a compound of Formula (IV): 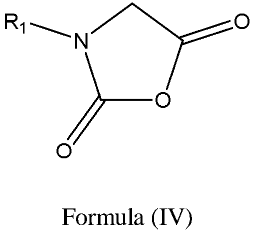
in the presence of an initiator, a catalyst and a solvent to form the compound of Formula (I): 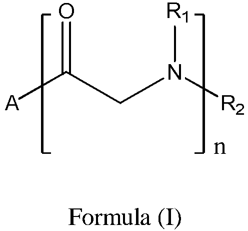 wherein,
R₁ is selected from C₁-C₁₂ alkyl, C₁-C₁₂ halo alkyl, C₃-C₁₂ heterocyclyl, C₆-C₁₀ aryl, and C₆-C₁₀ heteroaryl, wherein the C₁-C₁₂ alkyl, C₁-C₁₂ halo alkyl, C₃-C₁₂ heterocyclyl, C₆-C₁₀ aryl, and C₆-C₁₀ heteroaryl are optionally unsubstituted or substituted with one to three substituents selected from halogen, C₁-C₆ alkyl, C₁-C₆ alkyloxy, C₆-C₁₀ aryl, C₆-C₁₀ aryloxy, C₆-C₁₀ heteroaryl, and C₆-C₁₀ heteroaryloxy, wherein the heterocyclyl, heteroaryl, and heteroaryloxy optionally comprises one to three heteroatoms independently selected from N, S, and O;
R₂ is selected from H, C₁-C₁₂ alkyl carbonyl, C₁-C₁₂ alkyloxycarbonyl, C₇-C₁₁ arylcarbonyl, and C₇-C₁₁aryloxycarbonyl, wherein the C₁-C₁₂ alkyl carbonyl, C₁-C₁₂ alkyloxycarbonyl, C₇-C₁₁ aryl, and C₇-C₁₁ aryloxycarbonyl are optionally unsubstituted or substituted with one to three substituents selected from halogen, C₁-C₆ alkyl, C₁-C₆ alkyloxy, C₆-C₁₀ aryl, C₆-C₁₀aryloxy, C₆-C₁₀ heteroaryl, and C₆-C₁₀ heteroaryloxy, wherein the heteroaryl or heteroaryloxy optionally comprises one to three heteroatoms independently selected from N, S and O;
A is selected from:
-NR₃R₄, wherein R₃ and R₄ are each independently selected from H, C₁-C₁₂ alkyl, C₁-C₁₂ halo alkyl, C₃-C₁₂ heterocyclyl, C₆-C₁₀ aryl, C₆-C₁₀ heteroaryl and Rₐ-(CH₂CH₂O)ₘ-CH₂CH₂-,
wherein the C₁-C₁₂ alkyl, C₁-C₁₂ halo alkyl, C₃-C₁₂ heterocyclyl, C₆-C₁₀ aryl, and C₆-C₁₀ heteroaryl are optionally unsubstituted or substituted with one to three substituents selected from halogen, C₁-C₆ alkyl, C₁-C₆ alkyloxy, C₆-C₁₀ aryl, C₆-C₁₀aryloxy, C₆-C₁₀ heteroaryl, and C₆-C₁₀ heteroaryloxy, wherein the heterocyclyl, heteroaryl or heteroaryloxy optionally comprises one to three heteroatoms independently selected from N, S and O, and
wherein Rₐ is CH₃O- or NH₂-, and m is an integer ranging from 1 to 10,000, wherein one or some or all of m repeating units -(CH₂CH₂O)- are unsubstituted or optionally substituted with C₁-C₆ alkyl or C₁-C₆ alkyloxy,
with the proviso that R₃ and R₄ are not both H; and
(2) -SR₅, wherein R₅ is selected from C₆-C₁₀ aryl and C₆-C₁₀ heteroaryl, wherein the C₆-C₁₀ aryl, and C₆-C₁₀ heteroaryl group is optionally unsubstituted or substituted with one to three substituents selected from halogen, hydroxyl, carboxyl, nitro, amino, cyano, mercapto, C₁-C₆ alkyl, and C₁-C₆ alkyloxy, wherein the heteroaryl optionally comprises one to three heteroatoms independently selected from N, S and O;
n is an integer ranging from 550 to 8,000.

11. The method according to claim 10, wherein
the initiator is selected from R₃R₄N-R_{b} or R₅-SR_{b}, wherein R₃, R₄ and R₅ are as defined above, and R_{b} is selected from H and tris(C₁-C₆ alkyl )silyl;
the catalyst is selected from C₁-C₁₂ alkyl carboxylic acids or benzoic acid, wherein the benzoic acid is unsubstituted or optionally substituted with one to three independently selected from halogen, C₁-C₆ alkyl, C₁-C₆ alkoxy;
the solvent is selected from dichloromethane, chloroform, nitrobenzene, acetonitrile, dimethylformamide, a mixture of any one or more thereof.

12. The method according to claim 11, wherein the initiator is selected from: propylamine, butylamine, pentylamine, *n-*hexylamine, cyclopentylamine, cyclohexylamine, aniline, benzylamine, propylenediamine, butanediamine, hexamethylenediamine, 1,8-diamino-3,6-dioxaoctane, tris(2-aminoethyl)amine and Rₐ-(CH₂CH₂O)ₘ-CH₂CH₂NH₂ or a combination of any one or more thereof, wherein Rₐ is as defined above.

13. The method according to claim 11, wherein the initiator is selected from AR-SH or AR-S-Si(C₁-C₆ alkyl )₃, wherein AR is phenyl or naphthyl unsubstituted or substituted with one to three substituents independently selected from halogen, C₁-C₆ alkyl, and C₁-C₆ alkyloxy.

14. The method according to any one of claims 10-13, wherein:
the initiator is selected from benzylamine, p-methylthiophenol, and trimethyl(phenylthio)silane;
the catalyst is benzoic acid or pivalic acid; and
the solvent is dichloromethane.

15. The method according to any one of claims 10-13, wherein a molar ratio of the catalyst to the initiator is in a range of 0.1 to 100:1.

16. The method according to any one of claims 15, wherein the molar ratio of the catalyst to the initiator is in a range of 0.5 to 10:1.

17. The method according to any one of claims 16, wherein the molar ratio of the catalyst to the initiator is in a range of 2 to 6:1.

18. The method according to any one of claims 10-13, wherein a molar ratio of the compound of Formula (IV) to the initiator is 20 to 10,000:1.

19. The method according to claims 10-13, wherein the polymerization is carried out under ambient temperature and humidity conditions.
